# EUROPEAN PATENT APPLICATION

(11) **EP 1 666 330 A2**
(43) Date of publication of application: **07.06.2006**
(21) Application number: 05077791.1
(22) Date of filing: 05.12.2005
(51) Int. Cl.: B62B 3/00

(54) **Mobile platform**

(30) Priority: 03.12.2004 GB 0426635; 14.06.2005 GB 0512093
(71) Applicant: Besin B.V., 3851 BD Ermelo (NL)
(72) Inventor: Nauta, Felko, 7609 ZK Almelo (NL); Herben, Petrus Johannes Mathias, 6604 GH Wijchen (NL)
(74) Representative: Ferguson, Alexander

(57) **Abstract**

Mobile platform, comprising a panel for carrying a load and a number of wheels attached to the panel, wherein the panel is made from a cardboard, wherein the wheels are attached to the panel independent from each other by means of their own mounting plates that have been glued to the panel.

## Description

The invention relates to a mobile platform, comprising a panel for carrying a load and wheels attached to the panel. Such a mobile platform is also known by the name of "dolly".

Dollies are used for moving heavy objects, for instance when moving house, such as for moving a refrigerator. Such dollies usually consist of a wooden plate to which four castors have been mounted.

In supplying supermarkets and the like dollies can be used for during transportation supporting containers in which the products have been placed, for instance rack-shaped containers, as an alternative for racks that have themselves been provided with wheels. Such dollies usually comprise a metal carrier on which the wheels have been disposed.

The known dollies are heavy and costly. In the logistic application they are usually left behind at the location of delivery of the container due to their weight.

It is an object of the invention to provide a mobile platform of the type mentioned in the preamble that is easy to manage.

It is an object of the invention to provide a mobile platform of the type mentioned in the preamble that can be manufactured at low cost.

It is an object of the invention to provide a mobile platform of the type mentioned in the preamble that is at least partially recyclable.

It is an object of the invention to provide a mobile platform of the type mentioned in the preamble that is versatile in use.

From one aspect the invention provides a mobile platform, comprising a panel for carrying a load and a number of wheels attached to the panel, wherein the panel is made from a cardboard.

Because of the cardboard the production costs can be low. Due to the cardboard the mobile platform may moreover be lightweight so that it is easy to manage, such as for returning. The cardboard panel can be recyclable.

Preferably the cardboard panel has been formed from composite construction cardboard having several spaced apart layers of cardboard, preferably in the form of a honeycomb panel. In relation to their weight such panels offer a high bending and compression strength.

The wheels, that may be castors, can be attached to the panel independent from each other. The cardboard then forms the connection between the wheels. The wheels may optionally be attached to the panel at any given place, adjusted to the desires of the user.

The wheels may be disposed on mounting parts for attachment to the panel. Each wheel may then have its own mounting part.

In one embodiment the mounting parts engage on at least one main plane of the panel. If the mounting parts engage onto one of either main planes of the panel the other main plane is free. If the mounting parts engage on the main plane of the panel at which side the wheels are situated the loading surface is entirely free and flat.

Preferably the mounting parts are free from at least one of the circumferential edges of the panel, as a result of which the freedom in placing the wheels is increased, particularly when the mounting parts are free from all circumferential edges of the panel.

Other embodiments of the mounting parts are possible, such as in the form of two plates that keep or clamp the panel in between them, as elucidated in the description of the figures below.

The mounting parts at their side that faces away from the wheels can be provided with a protrusion that extends into the panel. In this way the transfer of shearing forces between wheel and panel is enhanced.

In an embodiment that is advantageous for recycling, the wheels are detachable from the mounting parts.

In a simple embodiment the mounting parts are attached to the panel by means of an adhesive, such as by means of a hot melt glue. Added fastening means, such as screws are not necessary.

For enhancing the reliability of transport the plane of the panel that faces away from the wheels may be provided with a non-slip provision, for instance in the form of a coating, so that shifting of the load is counteracted. Such a layer is easy to apply on cardboard at low costs.

The platform according to the invention may for instance advantageously be used in the transportation and/or displaying of articles. For that purpose the invention, according to a further aspect, provides an assembly of a mobile platform according to the invention and a container for articles placed on the panel, preferably in a removable manner.

In an embodiment for displaying, the container is adapted for offering products in the container for sale, as an alternative for the known arrangements of containers on pallets. The weight of said combination is kept low if the container has walls that have been made from a cardboard. The retailer is able to put the container on the mobile platform according to the invention easily at the place he wishes it to be in the shop, and later on if necessary move it, without having to use lifting tools. Many different containers can be supported on the mobile platform. When the container is empty, a next, filled container can be supplied in a short time (low weight, easy to move), also on a mobile platform (so without a lifting tool that may frighten the clients, during opening hours), and the empty container including platform can be taken away, optionally for re-use. Re-use may consist of complete re-use, for a next container, or in the sense of separating the wheels from the platform and mounting them on a new panel, while processing the old panel as recyclable waste.

In an additional or other embodiment the container is adapted for logistic transport of the products accommodated in the container.

The above-mentioned optional detachability of the wheels can be utilised for using the panel in static sales displays as well. Instead of wheels static supports, preferably provided with the same connection pin as the wheels, are attached to the panel.

In a comparable manner the invention may then furthermore provide an assembly of a platform according to any one of the preceding claims, wherein the wheels are separate from the panel, and a number of static supports that are attachable to the panel. The client thus has a kit and may choose for himself whether the platform will have to be mobile or static.

The aspect and measures described and/or shown in the application may where possible also be used individually. Said individual aspects, such as the exchangeability of the wheels and the static supports, panel coupling and other aspects may be subject of related divisional patent applications.

The invention will be elucidated on the basis of a number of exemplary embodiments shown in the attached drawings, in which:
Figure 1 shows a perspective of a first exemplary embodiment of a mobile platform according to the invention;
Figures 2A and 2B show a diagonal top view and a diagonal bottom view of a mounting plate for the wheels of the mobile platform according to claim 1;
Figure 2C shows an exploded view of a combination of the mounting plate of figures 2A and 2B and a castor for it;
Figures 3A and 3B show a top and bottom views of two possible wheel arrangements for the mobile platform according to figure 1;
Figure 3C shows a cross-section at the location of the wheel in the mounted condition;
Figure 4 shows a bottom view of a coupled assembly of two mobile platforms corresponding to figure 1;
Figures 4A and 4B show details of the coupling means for the assembly of figure 4;
Figures 5A-C show a bottom view and a side view, respectively of coupled mounting plates and an alternative for this in bottom view;
Figure 6 shows an example of an assembly of a sales display and a mobile platform of figure 1;
Figure 7 shows an alternative embodiment of a mobile platform according to the invention;
Figure 7A shows a mounting part for wheels for the mobile platform of figure 7;
Figure 8 shows a part of a third exemplary embodiment of a mobile platform according to the invention;
Figure 9 shows a further example of use;
Figure 10 shows yet a further example of use;
Figure 11 shows yet a further mounting example; and
Figures 12A-C show two alternative options of use.

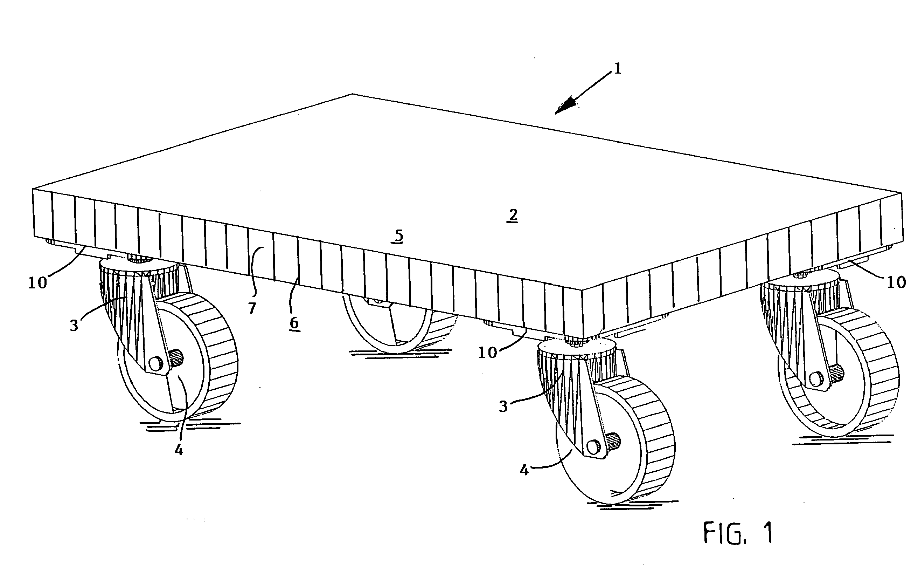

The mobile platform 1 in figure 1 comprises a panel 2 made from honeycomb cardboard, having an upper plate 5, a lower plate 6 and a honeycomb-shaped core 7 in between them, as known per se. The honeycomb panel 2 is available in particular from Besin International B.V. under the name BeeBoard. In this example the dimensions of the honeycomb panel may be 60 x 40 cm, for instance of the quality 400/12.5 LA.

At the lower side of the honeycomb panel 2, at its corners, wheels 4 that may be castors, are attached by means of four wheel holders 3.

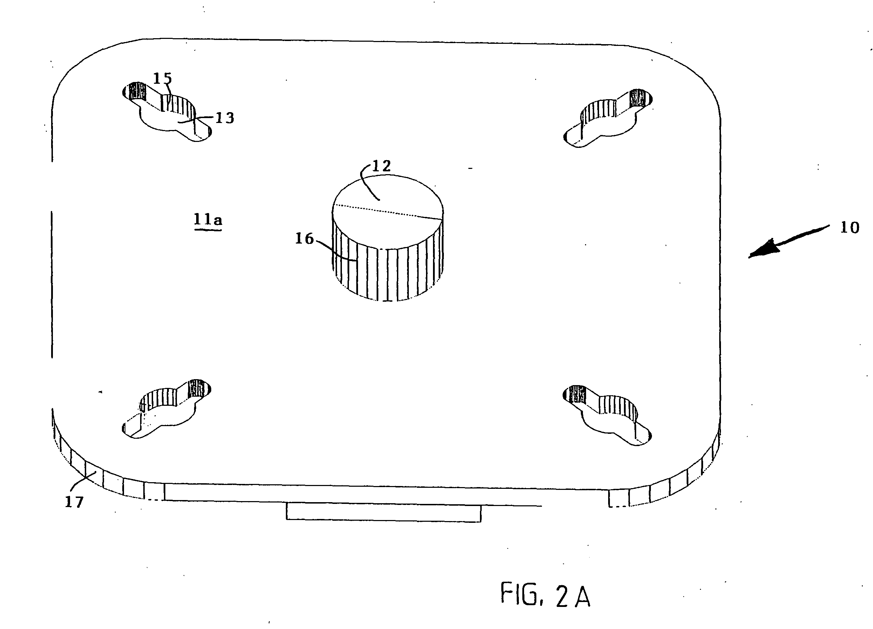

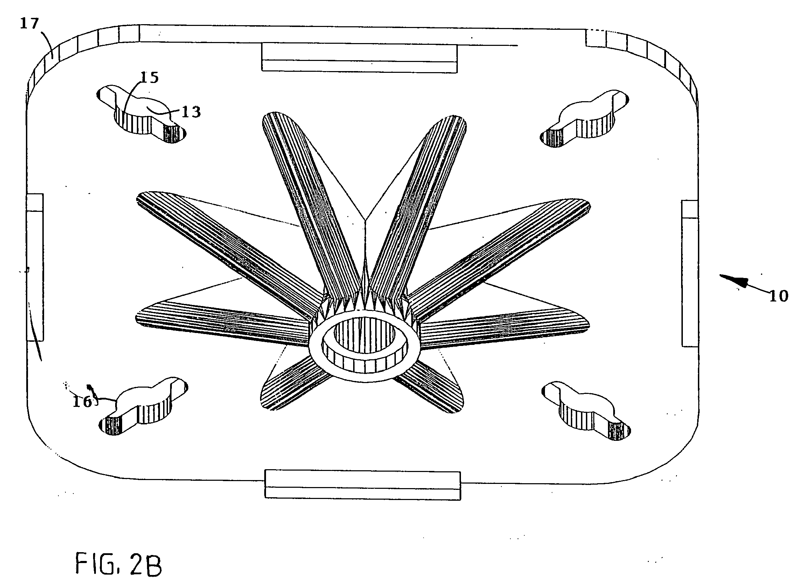

The wheels 3, 4 may by means of the mounting plate 10 shown in figures 2A and 2B be attached to the honeycomb panel 2. The mounting plate 10 comprises a flat plate 11 which is at least almost square, and at the location of the corners is provided with wing holes or winged holes 16. At the upper side the plate 11 is provided with a blind bush 12. At the lower side the plate 11 is provided with a bearing housing 13, having an access bush 14 and reinforcement ribs 15 as well as ribs 17. The bushes 12 and 14 form one continuing accommodation space for a bearing pin of the wheel 4. The mounting plate 10 is formed as one unity, for instance by injection moulding, of for instance polypropylene. The mounting plate 11 may be square for instance having a dimension of 12 by 12 cm.

The upper surface 11a of the plate 11 can be glued on, for instance with a hot melt glue.

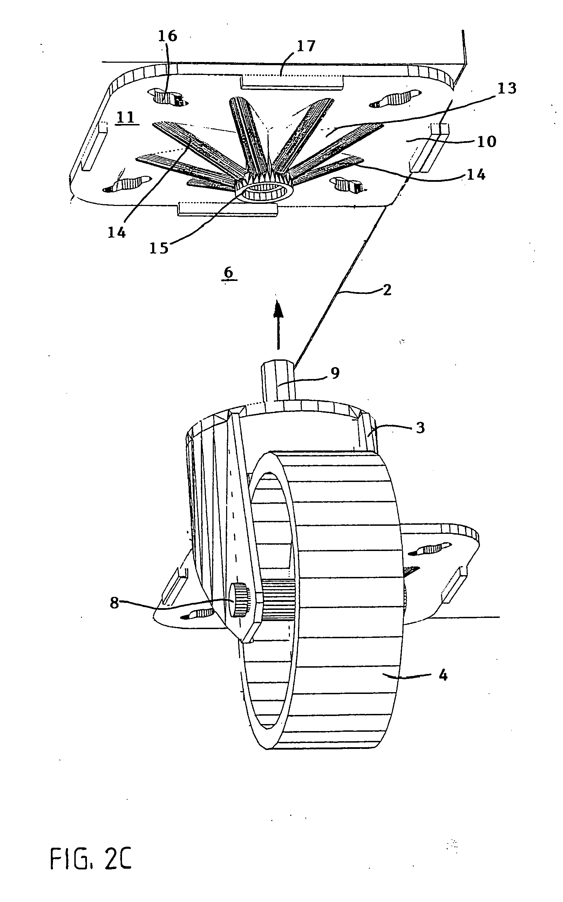

In figure 2C a castor is further shown. The wheel 4 is rotatable about a shaft 8, which is attached in the wheel holder 3. At the top the wheel holder 3 is provided with a bearing pin 9, which in a manner known per se can be inserted into the bush 14 of the bearing housing 13 and in this case even as far as into bush 12. The pin 9 is then held therein by snapping. The wheel sets 3/4 can also be removed from the mounting plates, for instance for recycling.

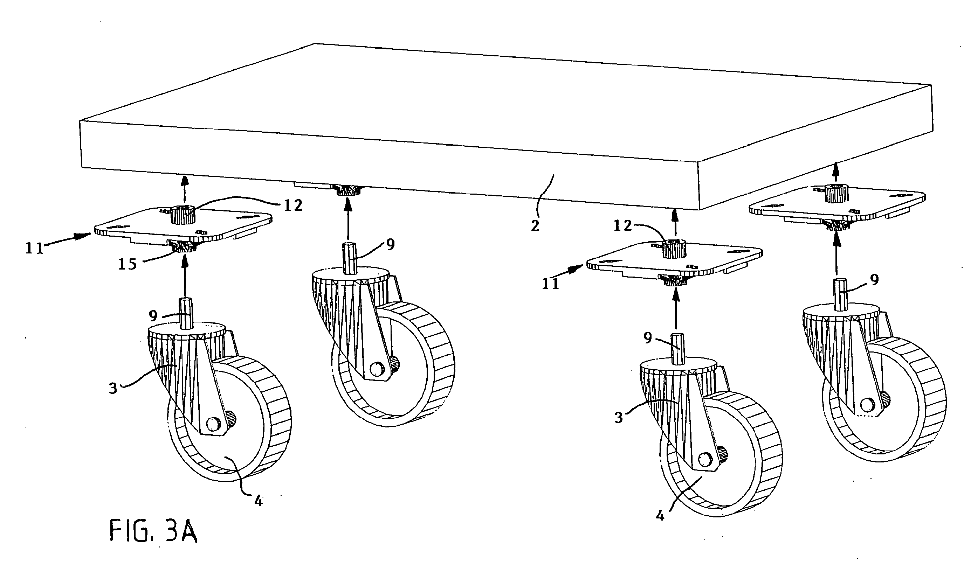

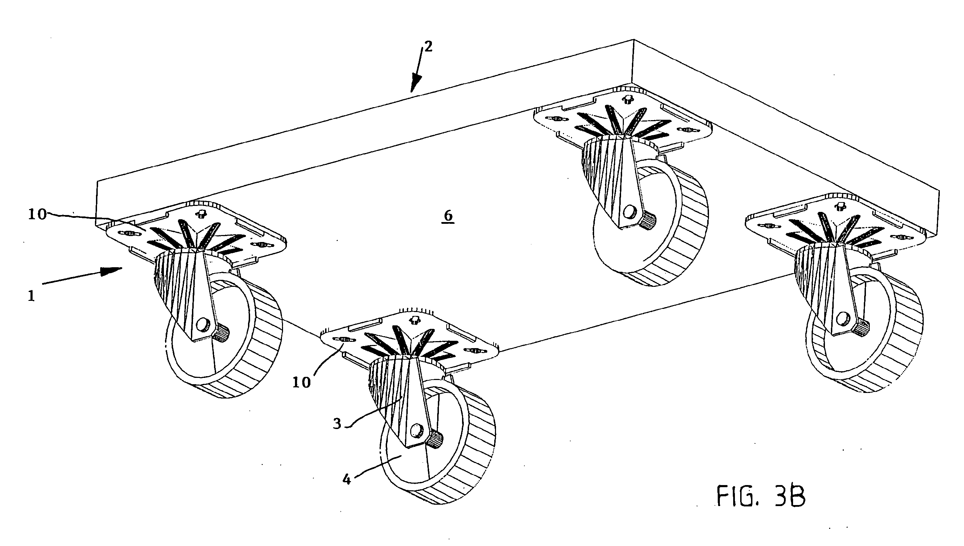

The mounting plates 10 with wheel sets 3/4 may at any randomly selected place be attached to the lower plate 6 of the honeycomb panel 2 by means of gluing. An example is shown in figure 3A and figure 3B.

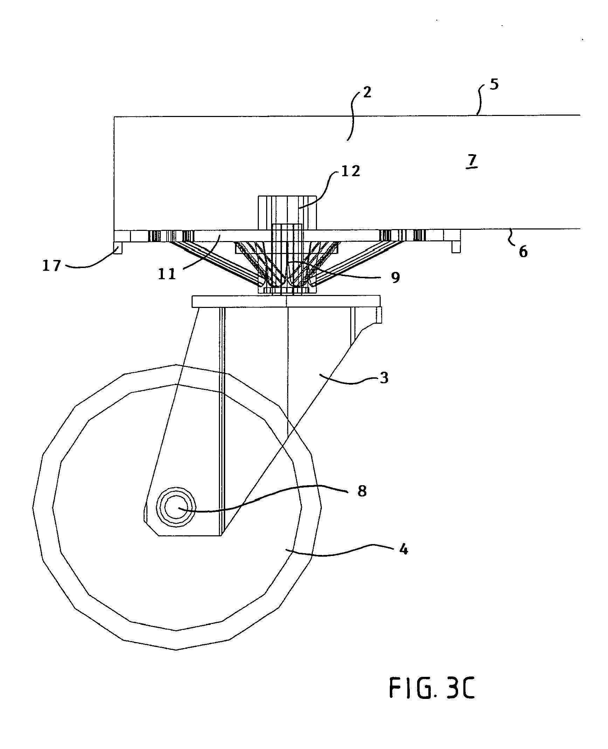

Various wheel sets can be placed, if so desired, and at other locations. In that case the mounting plates 10 provided with hot melt glue are pressed against the surface of the lower plate 6, after which as a result of pressing, the bush or cam 12 can be pressed through the lower plate 6, and can be accommodated in a honeycomb cell of the core 7 or optionally can press in a strip of core material. The upper surface 11a then adheres to the surface of the lower plate 6, so that the mounting plate is fixed to the panel 2. Figure 3C shows a cross-section of how the bush 12 extends into the panel 2. An advantage thereof is that horizontal forces are not just transferred via the glue layer, but because of the pin 9 extending in the bush 12 also via the portion, the bush 12, of the mounting plate 10 extending into the panel. The relatively large surface 11a enhances the force transfer with the panel 2.

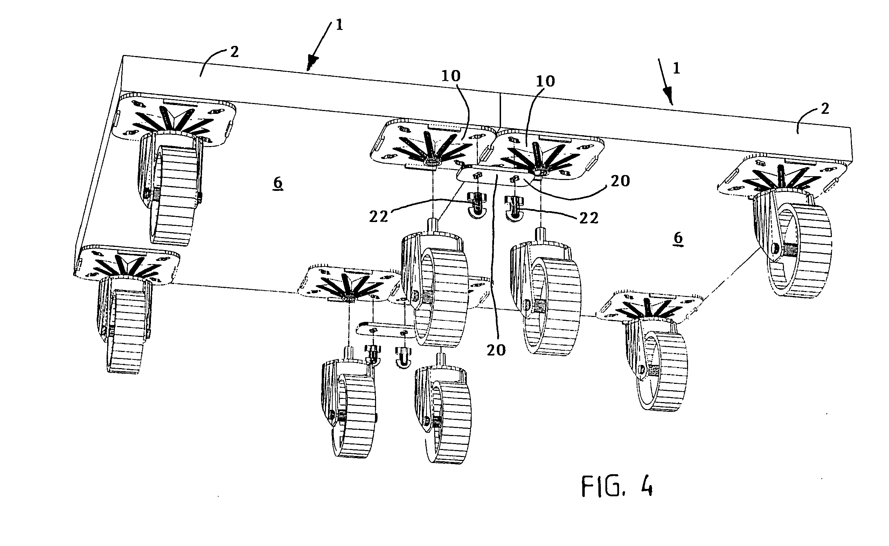

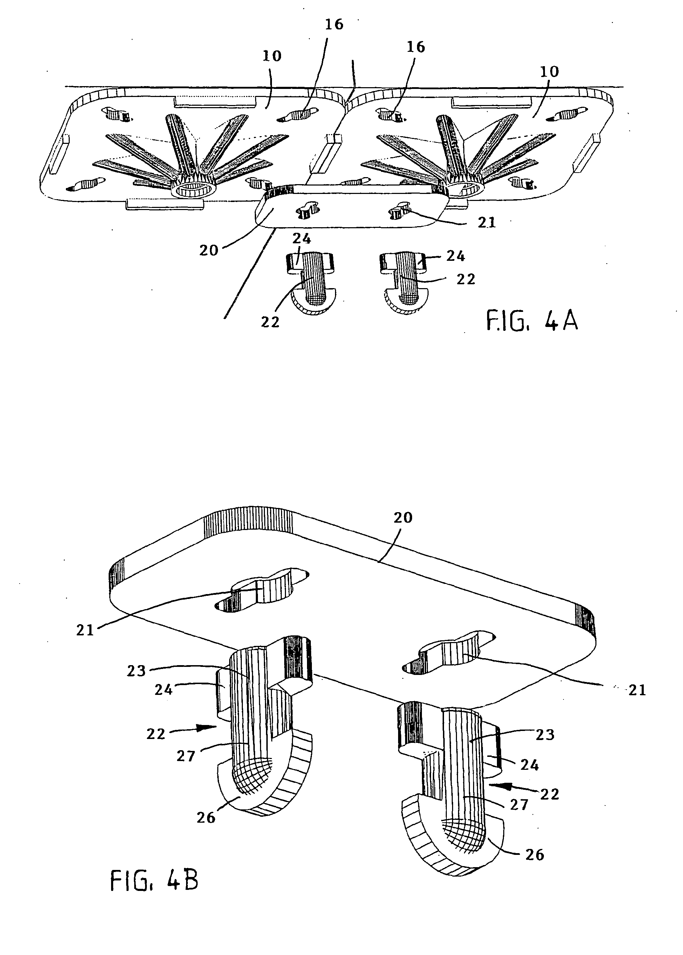

In figures 4, 4A and 4B as well as the figures 5A-C, the function of the winged holes 16 is further gone into. They are able to cooperate with coupling strips 20, that have been provided with wing holes 21 that correspond with winged holes 16. Coupling rods 22 are furthermore provided, having a rod section 23 which at its end is provided with two wings 24 and widened hand engagement end 26. Between the wings 24 and the widened engagement end 26 a circular rod section 27a is present. Its cross-section matches the hollow cross-section of the winged holes 16, 21.

In the embodiment shown in figures 4 and 5C two adjacent mobile platforms 1 can thus be coupled to each other, sitting next to each other. The coupling strip 20 is placed against the adjacent mounting plates of two adjoining mobile platforms, and subsequently the coupling rod 22 is inserted. The coupling rods 22 are then first held in an orientation position after which the wings 24 are able to pass through the hole 21, subsequently are rotated to some extent, in order to be inserted through the winged holes 16. By pressing the wings 24 can also be pushed through the lower plate 6, after which the coupling rods 22 can be rotated, in order to prevent a returning motion of the coupling rods 22. Note that the length of the circular section 27 is larger than the thickness of the plate 11.

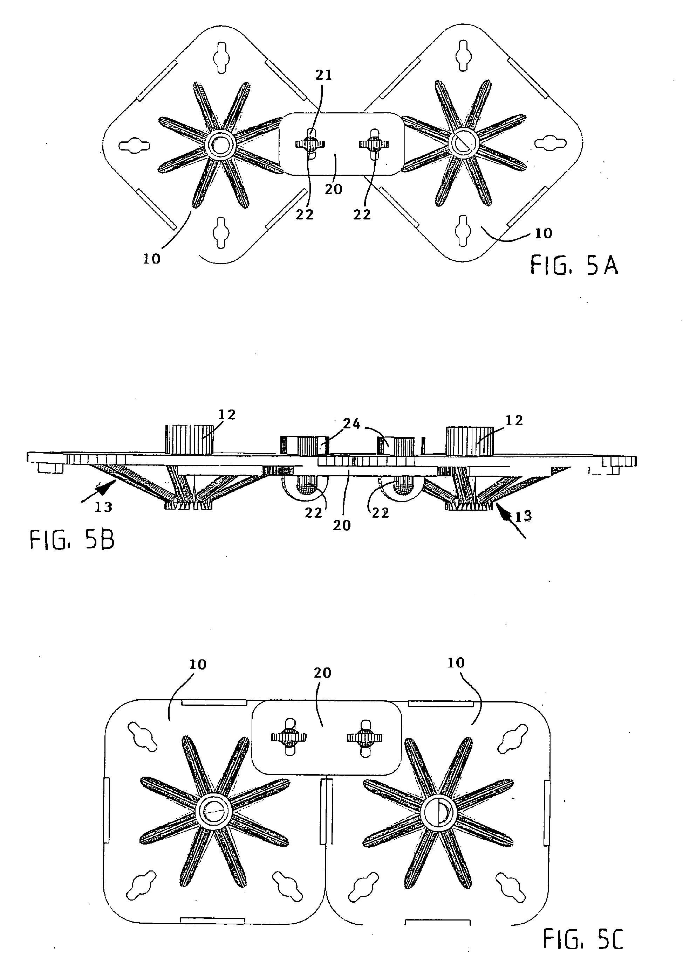

Depending on the shape of the panel 2 and the location of the mounting plates 10 a coupling in another orientation may also be desired, as shown in figures 5A and 5B.

Due to said simple coupling, wherein no tool is necessary, the mobile platform 1 can be extended to larger surfaces, into a multitude thereof. In this way a modular build-up is achieved, wherein for instance sales displays of a larger surface can also be placed on this system. Optionally platforms with sales displays from the same manufacturer, but containing different products, can be coupled in this way, so that in the situation of selling as well they remain connected one to the other.

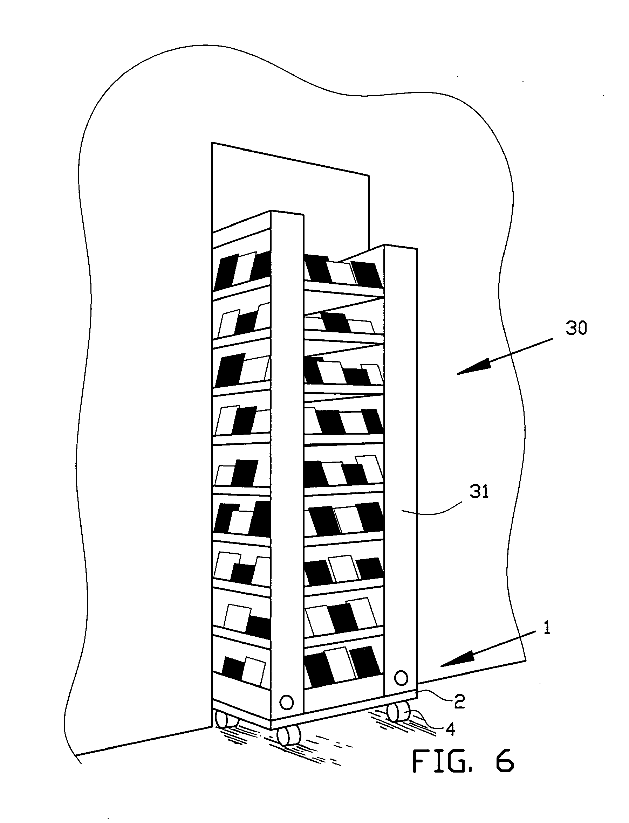

A single sales display is shown in figure 6. Said sales display may be made from cardboard, for instance corrugated board and thus is lightweight. The dimension is 60 by 40 cm, in this example, so that the sales display fits exactly on the mobile platform 1, having the same circumferential size. The total of sales display 31 and mobile platform 1 is lightweight, and easy to transport and manoeuvre by hand.

When the sales display 31, is empty it can easily be discarded as waste. The mobile platform 1 may optionally be re-used, in that shape, or after collection, be picked up by a waste processing company. Said company can detach the wheels, for re-use, after which the panel with mounting plates 10 will be processed as waste. In the first step in which the paper is separated from alien waste, a separation of mounting plate 10 from panel 2 may take place. Removal of the wheels may be taken care of by the chain store business or by the waste processing company.

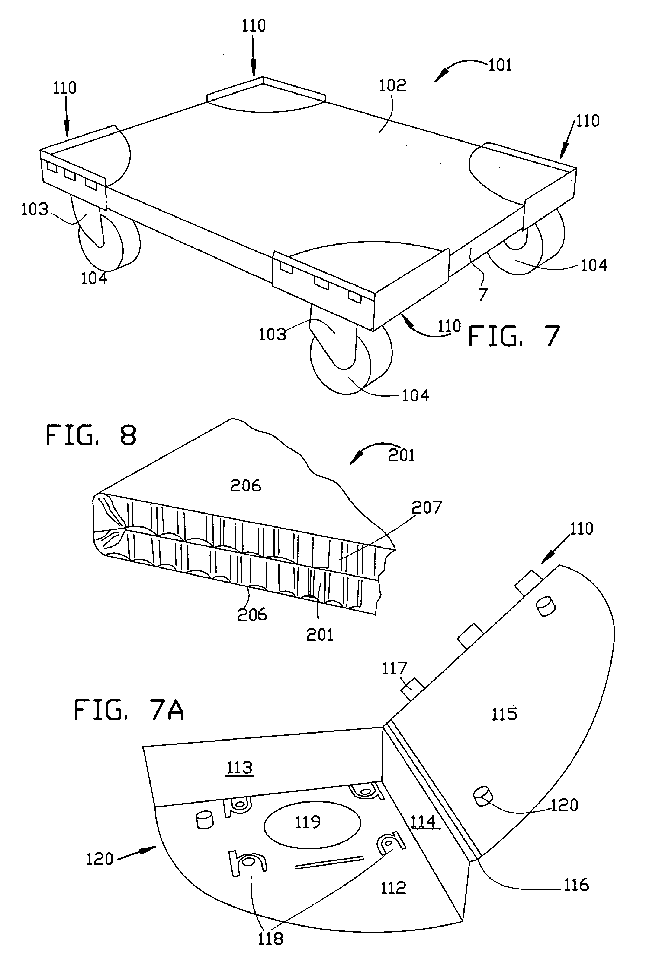

In figure 7 another embodiment for a mobile platform according to the invention is shown. The mobile platform 41 has a honeycomb cardboard-shaped panel 102 and wheel sets 103/104, which by means of mounting parts 110 are attached to panel 102. The mounting parts 110 are further shown in figure 7A. They are more or less box-shaped, having a part 111 resembling a tray having a bottom 112 and raised walls 113, 114, wherein an upper plate 115 is connected to raised walls 114 by means of a living hinge 116. The plate 115 is provided with clips 117, with which the plate 115 can be secured in folded down condition to raised wall 113. At the bottom plate 112 elevations 118 are provided for retaining an upper plate in a wheel set. The bottom plate 112 is furthermore provided with a hole 119 for a wheel holder (not shown). Bottom plate 112 and upper plate 115 may furthermore be provided with projecting pins 120, that also engage or press through in bottom plate 106 and upper plate 105, respectively, of the panel 102.

When placing the mounting parts 110 they are placed at the corner in question of the panel 102, subsequently the upper plate 115 is closed. Due to the projections 118 and 120 the mounting part 110 is then secured to the panel 102. A (square) plate that is known per se of a wheel holder may then rest on the upper surface of the bottom plate 112, upwardly retained by the panel 102 and by elevations 118.

Figure 8 shows an indication of how a further embodiment of a mobile platform 201 can be built, wherein the honeycomb cardboard-shaped panel 202 consists of a honeycomb panel that has been folded double. Th bottom layer can be used for attachment of a castor, for instance by means of a pin extending through said bottom panel and a plate placed on top of it, which plate is then clamped in between the honeycomb panels that are folded onto each other. Instead of folding a simple stacking of two panels can also be used.

If the panel 2 is damaged, the wheels and optionally its mounting parts can be removed and attached to another panel, optionally of a different dimension.

In a chain store business the mobile platforms can be kept in store, optionally with the wheels detached therefrom. This makes an easy and compact storage possible. When the mobile platforms are necessary they can easily be assembled and used.

Due to the use of honeycomb cardboard for the panel 2, it is lightweight, for instance less than half a kilo. The panels have a large bending resistance, and may be provided with a non-slip surface on the upper plate of the panel. When manufacturing the mobile platforms according to the invention the cardboard may easily be supplied in the desired size.

In case the wheel sets are also made of synthetic material, an entirely metal-free construction can be achieved, which may be advantageous for RFID-systems.

In storage optionally assemblies 30 can be stacked, depending on their height. In storage the wheels of the lowermost mobile platform are namely able to carry more weight than is the case in transportation conditions.

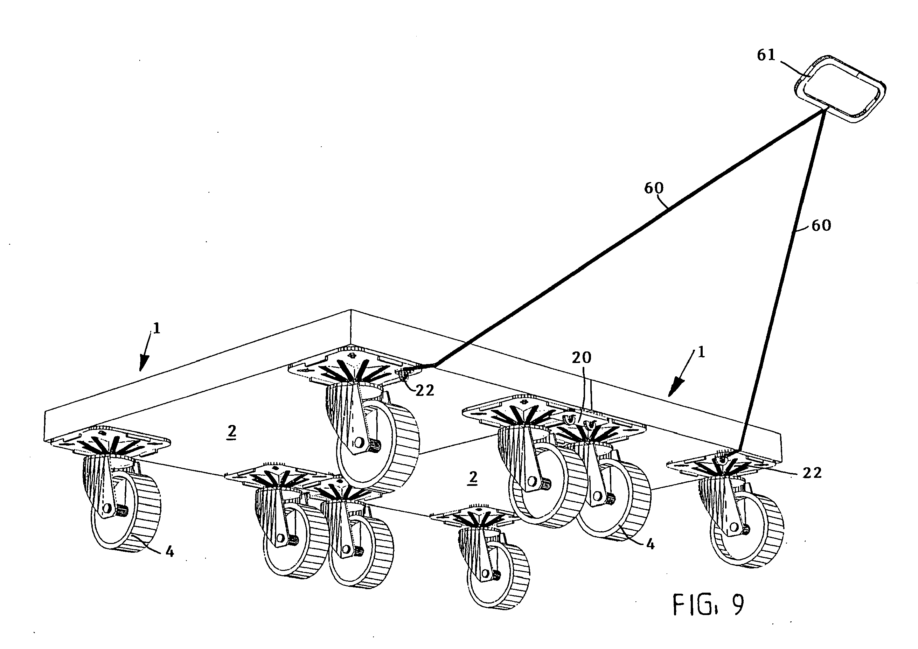

In figure 9 it is indicated that the coupling pins 22 can also be used for attaching accessories, for instance a cord 60, that is attached to a handle 61, for being able to pull the mobile platform 1 onwards, in this case shown in coupled condition. It will be understood that the cords 60 can also be attached to one single platform 1.

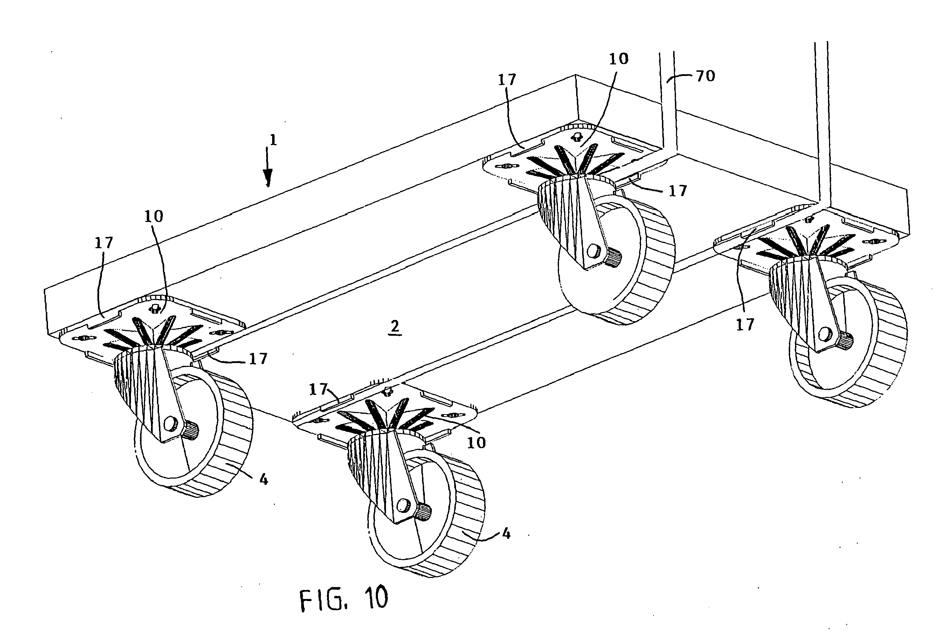

Figure 10 shows how the ribs 17 that extend downward from the plates 11 of the mounting parts 10 can be used for guiding/stopping straps 70, with which product container 31 that is not further shown can be secured to the panel 2 during transportation.

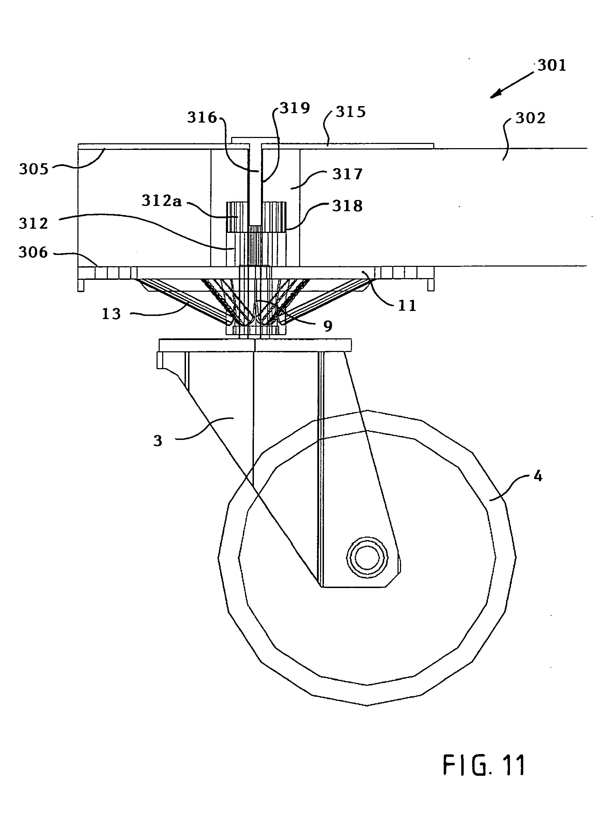

In figure 11 yet another mounting possibility is shown, wherein in the honeycomb panel 302, against its lower plate 306, again a mounting part 10 is attached, for instance by gluing, wherein the bush 312 is extended with a section 312a, in which a screw hole is provided. A plate 315 is placed on the upper plate 305, from which plate 315 a cylinder 317 extends downward, which at its lower end is provided with a recess 318, for accommodating the bush 312a. The cylinder 317 is provided with a through-hole 319 through which a screw bolt 316 may extend in the screw hole in bush section 312a, in order to move the plates 315 and 11 towards each other so that they are clamp-fixedly attached to the panel 302. Alternatives are possible, for instance instead of a bolt a glue connection can be used for connecting the upper plate 315 and lower plate 11 to each other, at the location of sections thereof meeting in the panel 302. Optionally a thermal connection can be used.

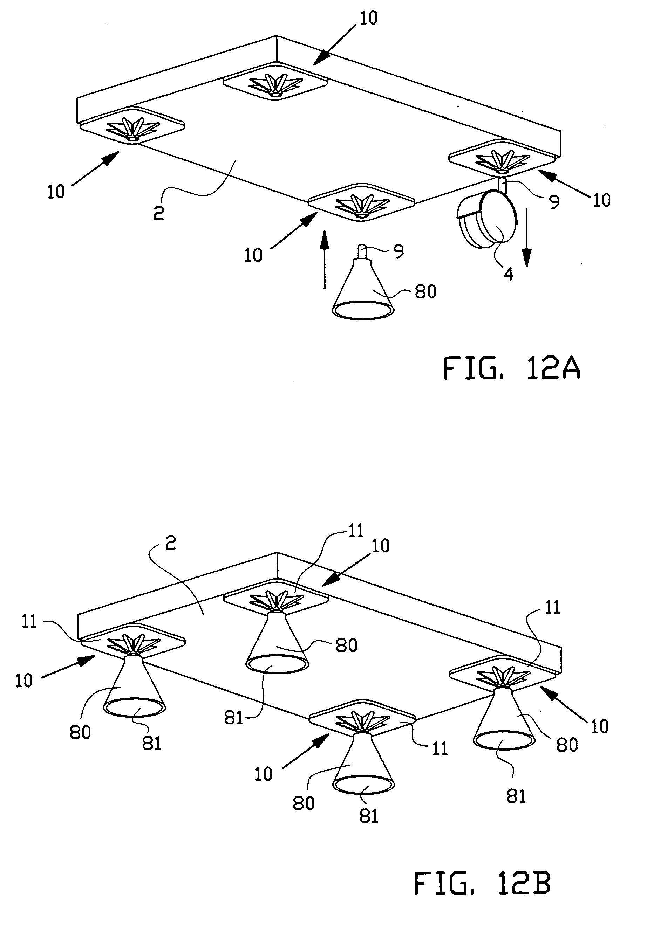

In figures 12A and 12B it is shown that a user may optionally choose to use the platform, when static supports 80 are supplied along in one package (panel 2 with mounting parts 10 attached thereon, four wheels 4 and four supports 80). Instead of the wheels 4 the user may attach the static supports 80, provided with the same snap pin 9 as the wheels 4 into the mounting parts 10, in the same way. Thus a static platform of figure 1 2B is obtained, wherein the platform with panel 2, mounting parts 10 and conical feet 80 on their bottom surfaces 81 can be placed on a basis in a static manner. This embodiment can optionally be stacked as well.

The user may also opt for combinations, wherein for instance one shoulder support 80 is used and wheels 4 are placed at the remaining three corners, so that a platform with sales display can be rotated in situ should such be necessary.

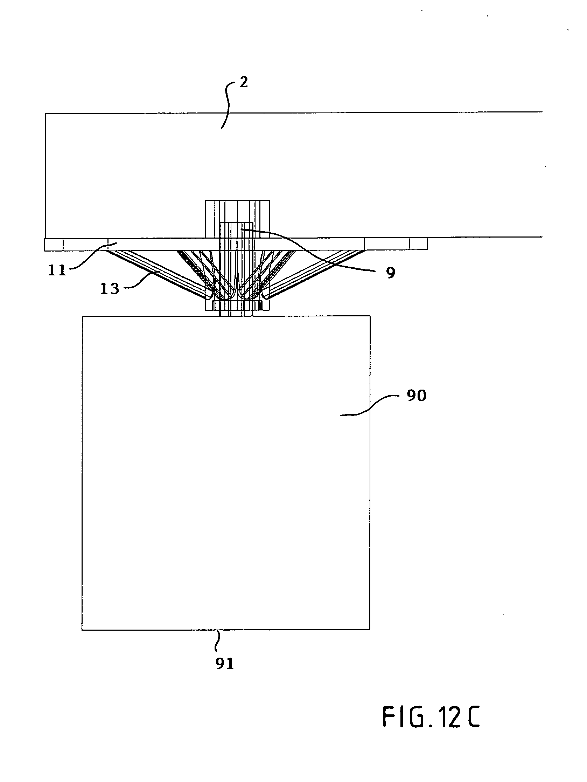

In figure 12C an alternative embodiment for static supports is shown, now in the shape of blocks 90 with support surfaces 91. The blocks 90 have again been provided with an attachment pin 9 for attachment to the mounting parts 10.

## Claims

1. Mobile platform, comprising a panel for carrying a load and a number of wheels attached to the panel, wherein the panel is made from a cardboard.

2. Mobile platform according to claim 1, wherein the wheels are attached to the panel independent from each other.

3. Mobile platform according to claim 1 or 2, wherein the wheels are disposed on mounting parts for attachment to the panel.

4. Mobile platform according to claim 3, wherein each wheel has its own mounting part.

5. Mobile platform according to claim 3 or 4, wherein the mounting parts engage on at least one main plane of the panel.

6. Mobile platform according to claim 5, wherein the mounting parts engage onto one of either main planes of the panel.

7. Mobile platform according to claim 6, wherein the mounting parts are situated on the main plane of the panel where the wheels are.

8. Mobile platform according to claim 5, 6 or 7, wherein the mounting parts are free from at least one of the circumferential edges of the panel, preferably free from all circumferential edges of the panel.

9. Mobile platform according to claim 5, wherein the mounting parts comprise two plates that keep or clamp the panel in between them.

10. Mobile platform according to any one of the claims 3-9, wherein the mounting parts at their side that faces away from the wheels are provided with a protrusion that extends into the panel.

11. Mobile platform according to any one of the claims 3-10, wherein the wheels are detachable from the mounting parts.

12. Mobile platform according to any one of the claims 3-11, wherein the mounting parts are attached to the panel by means of an adhesive, such as by means of a hot melt glue.

13. Mobile platform according to any one of the preceding claims, wherein at least some of the wheels are castors.

14. Mobile platform according to any one of the preceding claims, wherein the panel has been formed from compound construction cardboard having several spaced apart layers of cardboard, preferably in the form of a honeycomb panel.

15. Mobile platform according to any one of the preceding claims, wherein the plane of the panel that faces away from the wheels is provided with a non-slip provision, for instance in the form of a coating.

16. Platform according to claim 11 or according to a claim depending thereon, wherein the wheels have been replaced by static supports for a stationary arrangement of the platform.

17. Assembly of a platform according to any one of the preceding claims, wherein the wheels are separate from the panel, and a number of static supports that are attachable to the panel.

18. Assembly according to claim 17, wherein the platform is designed according to claim 11, wherein the wheels and the static supports are detachably attachable to the mounting parts.

19. Assembly of a platform according to any one of the preceding claims and a container for articles placed on the panel, preferably in a removable manner.

20. Assembly according to claim 19, wherein the container is adapted for offering products in the container for sale.

21. Assembly according to claim 20, wherein the container has walls that have been made from a cardboard.

22. Assembly according to claim 19, wherein the container is adapted for logistic transport of the products accommodated in the container.
